# EUROPÄISCHE PATENTSCHRIFT

(11) **EP 3 433 904 B1**
(45) Veröffentlichungstag und Bekanntmachung des Hinweises auf die Patenterteilung: **06.01.2021**
(21) Anmeldenummer: 17710908.9
(22) Anmeldetag: 15.03.2017
(51) Int. Cl.: H01R 13/04, B60L 53/16

(54) **STECKVERBINDERTEIL MIT EINEM AN EINEM KONTAKTELEMENT ANGEORDNETEN WÄRMEKAPAZITÄTSELEMENT**
A CONNECTOR EQUIPPED WITH A THERMAL ELEMENT
UN CONNECTEUR ÉQUIPPÉ D'ÉLÉMENT THERMIQUE

(30) Priorität: 22.03.2016 DE 102016105308
(43) Veröffentlichungstag der Anmeldung: 30.01.2019
(73) Patentinhaber: Phoenix Contact e-Mobility GmbH, 32816 Schieder-Schwalenberg (DE)
(72) Erfinder: FÜHRER, Thomas, 32825 Blomberg (DE); SEIFERT, Holger, 33014 Bad Driburg (DE)
(74) Vertreter: Muth, Bruno
(86) Internationale Anmeldenummer: PCT/EP2017/056071
(87) Internationale Veröffentlichungsnummer: WO 2017/162495

(56) Entgegenhaltungen:
- EP-A1- 2 104 183
- EP-A1- 2 993 741
- EP-A2- 0 668 632
- DE-A1-102011 001 471
- US-A1- 2014 199 881

## Beschreibung

Die Erfindung betrifft ein Steckverbinderteil zum Verbinden mit einem Gegensteckverbinderteil nach dem Oberbegriff des Anspruchs 1.

Ein solches Steckverbinderteil umfasst ein Gehäuse, das einen Steckabschnitt zum steckenden Verbinden mit dem Gegensteckverbinderteil aufweist, und zumindest ein an dem Steckabschnitt angeordnetes, einen Schaftabschnitt aufweisendes Kontaktelement zum elektrischen Kontaktieren mit einem zugeordneten Gegenkontaktelement des Gegensteckverbinderteils. Weiter umfasst ein solches Steckverbinderteil ein an dem Schaftabschnitt des zumindest einen Kontaktelements angeordnetes, fest mit dem Schaftabschnitt verbundenes Wärmekapazitätselement zum Aufnehmen von Wärme von dem zumindest einen Kontaktelement, wobei das Steckverbinderteil eine Mehrzahl von an dem Steckabschnitt angeordneten Kontaktelementen aufweist, wobei an jedem Kontaktelement ein Wärmekapazitätselement angeordnet ist.

Ein solches Steckverbinderteil kann z.B. als Ladestecker oder als Ladebuchse zum Aufladen eines elektrisch angetriebenen Fahrzeugs (auch bezeichnet als Elektrofahrzeug) Verwendung finden. Eine solche Ladebuchse ist beispielswiese an einem Fahrzeug angeordnet und kann steckend mit einem zugeordneten Gegensteckverbinderteil in Form eines Ladesteckers an einem an eine Ladestation angeschlossenen Kabel verbunden werden, um auf diese Weise eine elektrische Verbindung zwischen der Ladestation und dem Fahrzeug herzustellen.

Ladeströme können grundsätzlich als Gleichströme oder als Wechselströme übertragen werden, wobei insbesondere Ladeströme in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Steckverbinderteils führen können.

Ein aus der DE 10 2010 007 975 B4 bekanntes Ladekabel weist eine Kühlleitung auf, die eine Zuleitung und eine Rückleitung für ein Kühlmittel umfasst und somit einen Kühlmittelfluss hin und zurück in dem Ladekabel ermöglicht. Die Kühlleitung der DE 10 2010 007 975 B4 dient zum einen zum Abführen von an einem Energiespeicher eines Fahrzeugs entstehender Verlustwärme, zudem aber auch zum Kühlen des Kabels an sich.

Bei einem Ladesystem zum Aufladen eines Elektrofahrzeugs entsteht Wärme nicht nur an dem Kabel, mit dem ein Ladestecker beispielsweise mit einer Ladestation verbunden ist, sondern auch an dem Ladestecker und an einer Ladebuchse, in die der Ladestecker eingesteckt ist. Wärme entsteht hierbei insbesondere an Kontaktelementen beispielsweise der Ladebuchse, über die ein elektrischer Kontakt mit zugeordneten Gegenkontaktelementen beispielsweise auf Seiten eines Ladesteckers hergestellt wird, wenn der Ladestecker in die Ladebuchse eingesteckt ist. Solche Kontaktelemente, die aus einem elektrisch leitfähigen Metallmaterial, beispielsweise aus einem Kupferwerkstoff, gefertigt sind, erwärmen sich, wenn ein Ladestrom über die Kontaktelemente fließt, wobei grundsätzlich die Kontaktelemente in Abhängigkeit von dem zu übertragenden Ladestroms so zu dimensionieren sind, dass die Kontaktelemente eine hinreichende Stromtragfähigkeit aufweisen und eine Erwärmung an den Kontaktelementen begrenzt ist. Hierbei gilt, dass ein Kontaktelement umso größer zu dimensionieren ist, je größer der zu übertragende Ladestrom ist.

Einer Skalierung der Kontaktelementgröße mit steigendem Ladestrom sind jedoch nicht nur aufgrund des damit einhergehenden Bauraumbedarfs, des Gewichts und der Kosten Grenzen gesetzt, sondern zudem bestehen auch normative Vorgaben für die Dimensionierung der Kontaktelemente, die eine Skalierung ausschließen. Es besteht daher ein Bedürfnis danach, einen großen Ladestrom mit einem vergleichsweise klein dimensionierten Kontaktelement zu übertragen.

Bei einem aus der WO 2015/119791 A1 bekannten Ladesystem zum Aufladen eines Elektrofahrzeugs sind innerhalb eines Ladekabels Kühlmittelleitungen geführt, über die Wärme auch aus dem Bereich eines an das Ladekabel angeschlossenen Steckverbinderteils abgeführt werden kann.

Bei einem aus der US 5,909,099 bekannten Ladesystem werden Ladeströme transformatorisch über einen in einem Steckverbinderteil angeordneten Kern übertragen. In dem Kern kann eine Wärmeleitung zum Abführen von Wärme erstreckt sein.

Aus der EP 2 993 741 A1 ist ein Netzstecker 30 bekannt, welcher ein Gehäuse mit daran ausgebildeten Kühlrippen aufweist. Die Kühlung durch die Kühlrippen erfolgt derart, dass Luft durch bzw. entlang der Kühlrippen strömt, so dass die durch die Kühlrippen strömende Luft, Wärme von den Kühlrippen aufnehmen kann. Damit erfolgt bei dieser Ausgestaltung eine Kühlung des Netzsteckers über einen Stofftransport, indem die entlang der Kühlrippen strömende Luft eine Kühlmedium ausbildet, welches die Wärme des Netzsteckers aufnehmen kann.

Die DE 10 2011 001 471 A1 offenbart einen Steckverbinder, der einen Isolierkörper aufweist, der mindestens einen Kühlkanal zur direkten Beaufschlagung der Stromleitung mit einem fluiden Isoliermaterial aufweist. Damit erfolgt auch bei dieser Ausgestaltung eine Kühlung mittels Stofftransport, indem ein fluides Isoliermaterial vorgesehen ist, das durch einen Kühlkanal strömt und dabei Wärme aufnimmt.

Aus der EP 2 104 183 A1 ist eine Verbindungseinrichtung bekannt, welche einen ersten Verbinder und einen zweiten Verbinder aufweist, die jeweils ein Kontaktierungselement aufweisen, um im verbundenen Zustand der Verbinder eine elektrische Verbindung herzustellen. Die Verbinder liegen im verbundenen Zustand an einem Verbindungsbereich aneinander an. Mindestens einer der Verbinder weist eine Kühlmittelleitung mit einem oder mehreren Zugängen zum Zu- bzw. Abführen eines Kühlmittels auf. Die Kühlmittelleitung ist an dem Kontaktelement vorgesehen, um Wärme von einer Kontaktstelle zwischen den Kontaktierungselementen abzuführen.

In der US 2014/0199881 A1 ist eine aktive Kühlung beschrieben, wobei diese Kühlung mittels eines als thermoelektrischer Kühler oder als Ventilator ausgebildeten Kühlgeräts erfolgen soll. Ferner ist hier ein Kühlkörper beschrieben, welcher dazu dient, die Wärme aktiv abzutransportieren.

Die EP 0 668 632 A2 offenbart einen Kühlkörper, welcher Teil eines elektrischen Geräts ist. Dieses elektrische Gerät kann eine Lichtmaschine oder ein Anlasser sein.
Aufgabe der vorliegenden Erfindung ist es, ein Steckverbinderteil mit einem Kontaktelement zur Verfügung zu stellen, das eine große Stromtragfähigkeit beispielsweise zur Verwendung in einem Ladesystem zum Aufladen eines Elektrofahrzeugs aufweisen kann.

Diese Aufgabe wird durch einen Gegenstand mit den Merkmalen des Anspruchs 1 gelöst.

Demnach sind Wärmekapazitätselemente unterschiedlicher Kontaktelemente elektrisch voneinander isoliert.

An einem Kontaktelement ist somit ein Wärmekapazitätselement angeordnet, das dazu ausgestaltet ist, Wärme von dem Kontaktelement aufzunehmen. Das Wärmekapazitätselement weist eine große Wärmekapazität auf und ist thermisch mit dem Kontaktelement verbunden, sodass Wärme von dem Kontaktelement in das Wärmekapazitätselement einströmen und dort aufgenommen werden kann.

Dies geht von dem Gedanken aus, an einem Steckverbinderteil eine vergrößerte Wärmekapazität bereitzustellen, aufgrund derer das Erwärmen des Steckverbinderteils, insbesondere der Kontaktelemente des Steckverbinderteils, zumindest verlangsamt werden kann. Dies kann beispielsweise bei einem Steckverbinderteil in Form einer Ladebuchse an einem Elektrofahrzeug sinnvoll sein und wirkungsvoll ein übermäßiges Erwärmen an einer solchen Ladebuchse verhindern.

Generell ist davon auszugehen, dass eine Ladebuchse an einem Elektrofahrzeug nur unregelmäßig und in zeitlich unterbrochener Weise mit einem Ladestroms beaufschlagt wird und eine Erwärmung an der Ladebuchse somit in einem vergleichsweise kleinen Zeitraum auftritt, sich die Ladebuchse dann aber über einen vergleichsweise langen Zeitraum wieder abkühlen kann. Die Ladezeit bei einem Ladevorgang, insbesondere einem Schnellladevorgang, kann kleiner als 1 Stunde, beispielsweise in der Größenordnung zwischen 10 Minuten und 30 Minuten liegen. Nach dem Aufladen wird das Fahrzeug über einen längeren Zeitraum gefahren, bevor das Fahrzeug erneut aufgeladen und die Ladebuchse somit wieder mit Ladeströmen beaufschlagt wird. Während ein Ladestecker an einer Ladestation unter Umständen im Dauerbetrieb zum Aufladen einer Vielzahl von Elektrofahrzeugen nacheinander verwendet wird und somit unter Umständen nahezu ununterbrochen mit Ladeströmen beaufschlagt ist, kann sich eine Ladebuchse somit nach einem Ladevorgang über einen längeren Zeitraum wieder abkühlen.

Weist ein Steckverbinderteil beispielsweise in Form einer Ladebuchse eine vergrößerte Wärmekapazität auf, so ist das Erwärmen an dem Steckverbinderteil verzögert. Die Wärmekapazitätselemente des Steckverbinderteils zum Beispiel in Form einer Ladebuchse können hierbei so dimensioniert sein, dass während eines üblichen Ladevorgangs die Erwärmung unter einer vorbestimmten Grenze, beispielsweise unter 50 K, bleibt, sodass eine übermäßige, unzulässige Erwärmung an dem Steckverbinderteil in Form der Ladebuchse während eines Ladevorgangs ausgeschlossen ist.

Durch Verwendung solcher Wärmekapazitätselemente kann somit eine übermäßige Erwärmung an dem Steckverbinderteil verhindert werden, ohne dass eine aktive Kühlung bereitgestellt wird. Solche Wärmekapazitätselemente können vergleichsweise kostengünstig und einfach bereitgestellt werden.

Das Steckverbinderteil weist eine Mehrzahl von an dem Steckabschnitt angeordneten Kontaktelementen auf. Hierbei ist an jedem Kontaktelement ein (gesondertes) Wärmekapazitätselement angeordnet, sodass ein Wärmekapazitätselement gezielt Wärme von dem jeweils zugeordneten Kontaktelement aufnehmen kann.

Die Kontaktelemente sind elektrisch leitend, und vorzugsweise sind auch die Wärmekapazitätselemente aus einem metallenen Werkstoff, beispielsweise Kupfer oder Aluminium, hergestellt, um eine - neben einer vergleichsweise großen Wärmekapazität - eine gute Wärmeleitfähigkeit zu erhalten. Die Wärmekapazitätselemente sind somit ebenfalls elektrisch leitfähig, was erfordert, dass Wärmekapazitätselemente unterschiedlicher Kontaktelemente elektrisch voneinander isoliert sind, um einen Stromfluss über die Wärmekapazitätselemente zwischen unterschiedlichen Kontaktelementen zu verhindern.

Zur elektrischen Isolierung kann zwischen benachbarten Wärmekapazitätselementen zweier Kontaktelemente beispielsweise eine Gehäusetrennwand aus einem elektrisch isolierenden Material, zum Beispiel Kunststoff, angeordnet sein. Mehrere Wärmekapazitätselemente, die unterschiedlichen Kontaktelementen zugeordnet sind, können somit nebeneinander in dem Gehäuse des Steckverbinderteils angeordnet sein und sind paarweise durch Gehäusetrennwände voneinander getrennt, sodass eine elektrische Isolierung zwischen den Wärmekapazitätselementen bereitgestellt wird, die Wärmekapazitätselement aber dennoch räumlich nah beieinander innerhalb des Gehäuses des Steckverbinderteils angeordnet sein können.

Das einem Kontaktelement zugeordnete Wärmekapazitätselement ist, in einer Ausgestaltung, mit einem Ansetzstück an den Schaftabschnitt des zugeordneten Kontaktelements angesetzt. Der Schaftabschnitt ist beispielsweise zylindrisch geformt. Entsprechend weist das Ansetzstück eine konkave, zur Form des Schaftabschnitts komplementäre Ansetzfläche auf, sodass das Ansetzstück flächig an den zylindrischen Schaftabschnitt angesetzt und flächig mit dem Schaftabschnitt verbunden werden kann.

Das Wärmekapazitätselement ist fest mit dem Schaftabschnitt des zugeordneten Kontaktelements verbunden. Die Verbindung kann kraftschlüssig, beispielsweise unter Verwendung eines Schraubelements, hergestellt sein. Ebenso ist denkbar und möglich, dass Wärmekapazitätselement formschlüssig oder stoffschlüssig zum Beispiel durch Kleben oder Schweißen mit dem Schaftabschnitt zu verbinden.

Ist das Ansetzstück beispielsweise kraftschlüssig mit dem Schaftabschnitt des Kontaktelements verbunden, beispielsweise indem das Ansetzstück mit dem Schaftabschnitt verschraubt ist, so kann vorteilhafterweise zwischen dem Ansetzstück und dem Schaftabschnitt eine Wärmeleitpaste vorgesehen sein, durch die ein günstiger Wärmeübergang für einen Wärmefluss zwischen dem Schaftabschnitt und dem Wärmekapazitätselement erreicht wird.

Das Wärmekapazitätselement ist vorzugsweise durch einen massiven Körper ausgestaltet. Beispielsweise kann das Wärmekapazitätselement eine quaderförmigen Gestalt aufweisen, wobei an dem Wärmekapazitätselement beispielsweise auch Kühlrippen angeordnet sein können, über die Wärme in günstiger Weise an die Umgebung abgegeben werden kann.

In einer Weiterbildung kann das Wärmekapazitätselement ein oder mehrere Öffnungen aufweisen, in denen ein Material mit besonderen Eigenschaften für eine Wärmeaufnahme angeordnet sein kann. Beispielsweise kann in den Öffnungen ein Phasenwechselmaterial angeordnet sein, das bei Erwärmung einen Phasenübergang beispielsweise von fest zu flüssig ausführt und dadurch in der Lage ist, eine große Wärmeenergie aufzunehmen. Solche Phasenwechselmaterialien nutzen die Enthalpie thermodynamischer Zustandsänderungen eines Speichermediums, beispielsweise eines Phasenübergangs von fest zu flüssig und umgekehrt, aus. Phasenwechselmaterialien können beispielsweise Salze oder Paraffine als Speichermedium verwenden. Ebenso ist denkbar, niedrigschmelzenden Metalllegierungen, zum Beispiel ein sogenanntes Field'sches Metall, einzusetzen.

Ein solches Phasenwechselmaterial ist in die Öffnungen des Wärmekapazitätselements eingefüllt und liegt in einem Ausgangszustand, bei nicht erwärmtem Wärmekapazitätselement, beispielsweise in einer festen Form vor. Erwärmt sich das Wärmekapazitätselement aufgrund einer Erwärmung des zugeordneten Kontaktelements, so führt das Phasenwechselmaterial einen Phasenübergang von fest zu flüssig aus und nimmt dabei Wärme auf. Bei einem umgekehrten Phasenübergang wird entsprechend dann wieder Wärme abgegeben.

Die Öffnungen in dem Wärmekapazitätselement können durch ein geeignetes Schließelement nach außen hin geschlossen sein, sodass das Phasenwechselmaterial in einem flüssigen Zustand nicht aus den Öffnungen austreten kann.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Kabel;
- Fig. 2: eine Ansicht eines Steckverbinderteils in Form eines Ladesteckers;
- Fig. 3A: eine Vorderansicht eines Steckverbinderteils in Form einer Ladebuchse;
- Fig. 3B: eine rückseitige Ansicht des Steckverbinderteils;
- Fig. 4A: eine gesonderte Ansicht eines Kontaktelements des Steckverbinderteils mit einem daran angeordneten Wärmekapazitätselement;
- Fig. 4B: eine andere Ansicht des Kontaktelements;
- Fig. 5A: eine Vorderansicht eines anderen Ausführungsbeispiels eines Steckverbinderteils in Form einer Ladebuchse;
- Fig. 5B: eine rückseitige Ansicht des Steckverbinderteils;
- Fig. 6A: eine gesonderte Ansicht eines Kontaktelements mit einem daran angeordneten Wärmekapazitätselement;
- Fig. 6B: eine andere Ansicht des Kontaktelements; und
- Fig. 7: eine Explosionsansicht des Kontaktelements.

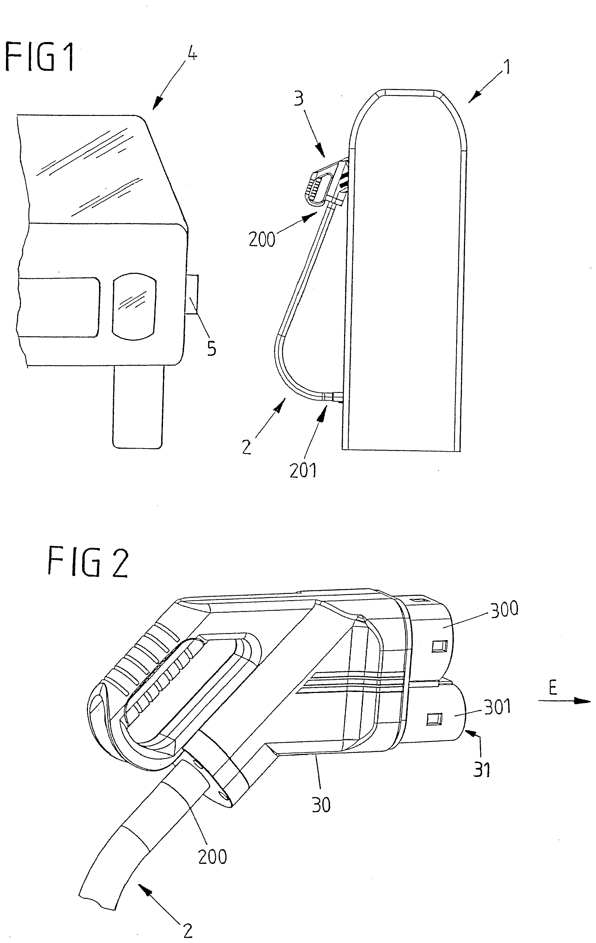

Fig. 1 zeigt eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Gegensteckverbinderteil 3 in Form eines Ladesteckers verbunden ist.

Wie aus der vergrößerten Ansicht gemäß Fig. 2 ersichtlich, weist das Gegensteckverbinderteil 3 an einem Gehäuse 30 Steckabschnitte 300, 301 auf, mit denen das Gegensteckverbinderteil 3 steckend mit einem zugeordneten Steckverbinderteil 5 in Form einer Ladebuchse an dem Fahrzeug 4 in Eingriff gebracht werden kann. Auf diese Weise kann die Ladestation 1 elektrisch mit dem Fahrzeug 4 verbunden werden, um Ladeströme von der Ladestation 1 hin zu dem Fahrzeug 4 zu übertragen.

Um ein zügiges Aufladen des Elektrofahrzeugs 4 z.B. im Rahmen eines sogenannten Schnellladevorgangs zu ermöglichen, weisen die übertragenen Ladeströme eine große Stromstärke, z.B. größer als 200 A, gegebenenfalls sogar in der Größenordnung von 350 A oder darüber, auf. Aufgrund solch hoher Ladeströme kommt es an dem Kabel 2 und auch am Ladestecker 3 sowie der Ladebuchse 5 zu thermischen Verlusten, die zu einem Erwärmen des Kabels 2, des Ladesteckers 3 und der Ladebuchse 40 führen können.

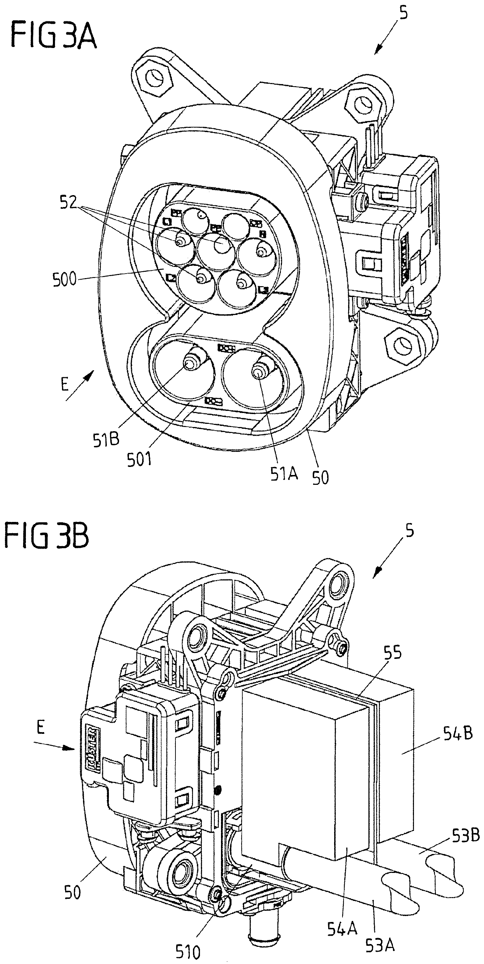

Ein Ausführungsbeispiel eines Steckverbinderteils 5 in Form einer Ladebuchse zeigen Fig. 3A und 3B. Das Steckverbinderteil 5 weist ein Gehäuse 50 auf, an dem Steckabschnitte 500, 501 ausgebildet sind, die steckend mit den Steckabschnitten 300, 301 des Gegensteckverbinderteils 3 in Form des Ladesteckers in Eingriff gebracht werden können (siehe Fig. 2). An einem ersten, oberen Steckabschnitt 500 sind hierbei beispielsweise fünf Kontaktelemente 52 in Form von sogenannten Lastkontakten zum Übertragen eines (mehrphasigen) Wechselstroms und zusätzlich zwei Signalkontakte angeordnet. An einem zweiten, unteren Steckabschnitt 501 sind demgegenüber zwei Kontaktelemente 51A, 51B zum Übertragen eines Ladestroms in Form eines Gleichstroms angeordnet.

Das Gegensteckverbinderteil 3 in Form des Ladesteckers kann in einer Einsteckrichtung E steckend mit dem Steckverbinderteil 5 in Form der Ladebuchse in Eingriff gebracht werden. In eingesteckter Stellung kontaktieren Kontaktelemente 31 an den Steckabschnitten 300, 301 mit den Kontaktelementen 51A, 51B, 52 der Steckabschnitte 500, 501 des Steckverbinderteils 5, sodass Ladeströme zum Aufladen des Elektrofahrzeugs 4 fließen können.

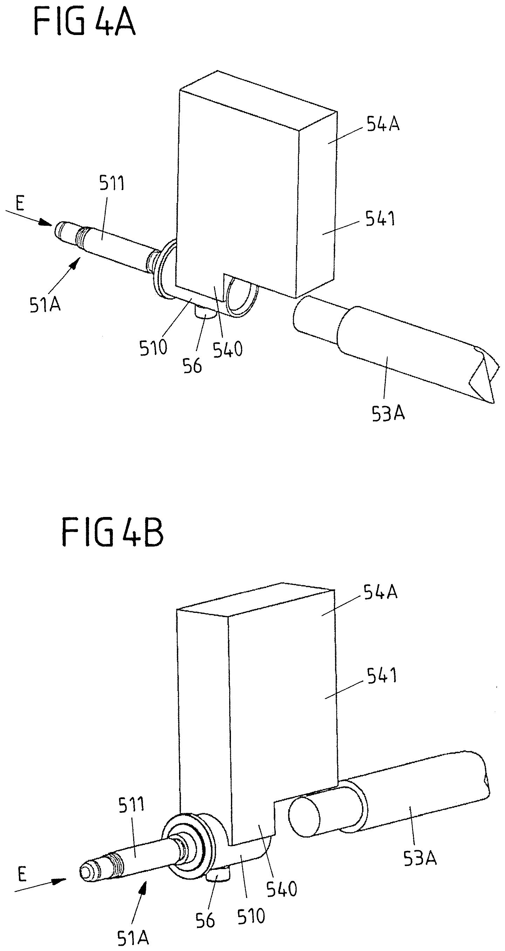

Bei dem Ausführungsbeispiel gemäß Fig. 3A, 3B sind die Kontaktelemente 51A, 51B an von dem Steckabschnitt 501 abgewandten Enden jeweils mit einer Lastleitung 53A, 53B verbunden, über die ein Ladestroms zu den Kontaktelementen 51A, 51B geführt wird. Wie aus den gesonderten Ansichten gemäß Fig. 4A, 4B ersichtlich, sind diese Lastleitungen 53A, 53B jeweils in einen Schaftabschnitt 510 des zugeordneten Kontaktelements 51A, 51B eingesteckt und auf diese Weise elektrisch mit dem jeweils zugeordneten Kontaktelement 51A, 51B kontaktiert.

Jedes Kontaktelement 51A, 51B weist eine im Wesentlichen zylindrische Grundform auf, mit einem zylindrischen Schaftabschnitt 510, über den die Verbindung mit der zugeordneten Lastleitung 53A, 53B hergestellt wird, und einem in den Steckabschnitt 501 hineinragenden Kontaktstift 511, der zur elektrischen Kontaktierung mit einem zugeordneten Gegenkontaktelement 31 auf Seiten des Gegensteckverbinderteils 3 dient.

Werden Ladeströme von der Ladestation 1 hin zu dem Fahrzeug 4 übertragen und fließen solche Ladeströme über die Kontaktelemente 51A, 51B des Steckverbinderteils 5, so kommt es zu einer Erwärmung an den Kontaktelementen 51A, 51B. Um die Erwärmung an den Kontaktelementen 51A, 51B zu verzögern, ist an jedem Kontaktelement 51A, 51B ein Wärmekapazitätselement 54A, 54B angeordnet, das einen massiven, aus einem Material guter Wärmeleitfähigkeit (zum Beispiel Kupfer oder Aluminium) gefertigten Körper 541 aufweist und eine vergleichsweise große Wärmekapazität zur Aufnahme von Wärme von dem Kontaktelement 51A, 51B bereitstellt.

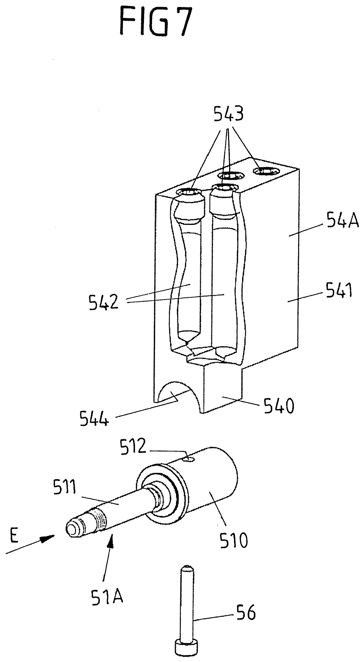

Das Wärmekapazitätselement 54A, 54B ist über ein Ansetzstück 540 mit dem Schaftabschnitt 510 des jeweils zugeordneten Kontaktelements 51A, 51B verbunden. Das Ansetzstück weist hierzu, wie in Fig. 7 ersichtlich, eine Ansetzfläche 544 auf, die flächig an den zylindrischen Schaftabschnitt 510 des zugeordneten Kontaktelements 51A, 51B angesetzt ist und sich durch eine zu dem zylindrischen Schaftabschnitt 510 komplementäre Form an den Schaftabschnitt 510 flächig anschmiegt.

Das Wärmekapazitätselement 54A, 54B ist bei dem dargestellten Ausführungsbeispiel durch ein Schraubelement 56 kraftschlüssig mit dem Schaftabschnitt 510 verbunden. Zwischen dem Schaftabschnitt 510 und der Ansetzfläche 544 des Ansetzstücks 540 kann eine Wärmeleitpaste vorgesehen sein, um einen vorteilhaften Wärmeübergang zwischen dem Schaftabschnitt 510 und den Wärmekapazitätselement 54A, 54B bereitzustellen.

Ein Ladevorgang für ein Elektrofahrzeug 4 kann beispielsweise in der Größenordnung von einer Stunde, unter Umständen auch deutlich schneller als eine Stunde, beispielsweise in einer Größenordnung zwischen 10 Minuten und 30 Minuten dauern. Während das Steckverbinderteil 3 in Form des Ladesteckers unter Umständen einer Vielzahl von Ladevorgängen nacheinander ausgesetzt ist, wird in der Regel eine Zeit vergehen, bis das Elektrofahrzeug 4 erneut aufzuladen ist und das Steckverbinderteil 5 in Form der Ladebuchse an dem Fahrzeug 4 erneut mit Ladeströmen beaufschlagt ist. Durch geeignete Dimensionierung der Wärmekapazitätselemente 54A, 54B kann somit verhindert werden, dass während der Dauer eines Ladevorgangs es an dem Steckverbinderteil 5 in Form der Ladebuchse zu einer übermäßigen Erwärmung kommen kann, beispielsweise zu einer Erwärmung jenseits von 50 K. Durch das Vorsehen der Wärmekapazitätselemente 54A, 54B wird das Erwärmen der Kontaktelemente 51A, 51B verzögert, indem eine vergrößerte Wärmekapazität an den Kontaktelementen 51A, 51B bereitgestellt wird, sodass innerhalb eines üblichen Ladevorgangs eine maximal zulässige Erwärmung an den Kontaktelementen 51A, 51B nicht überschritten werden kann.

Wie aus Fig. 3B ersichtlich, sind die Wärmekapazitätselemente 54A, 54B nebeneinander benachbart an dem Gehäuse 50 angeordnet. Um einen günstigen Wärmeübergang zu den Kontaktelementen 51A, 51B herzustellen, sind die Wärmekapazitätselemente 54A, 54B in direktem Kontakt mit den Schaftabschnitten 510 der Kontaktelemente 51A, 51B, was bei metallischer Ausgestaltung der Wärmekapazitätselemente 54A, 54B eine elektrische Kontaktierung mit den Kontaktelementen 51A, 51B bewirkt. Um hierbei einen Kurzschluss zwischen den Kontaktelementen 51A, 51B über die Wärmekapazitätselemente 54A, 54B zu verhindern, sind die Wärmekapazitätselemente 54A, 54B durch eine elektrisch isolierende Gehäusetrennwand 55 voneinander getrennt, sodass die Kontaktelemente 51A, 51B elektrisch voneinander isoliert sind.

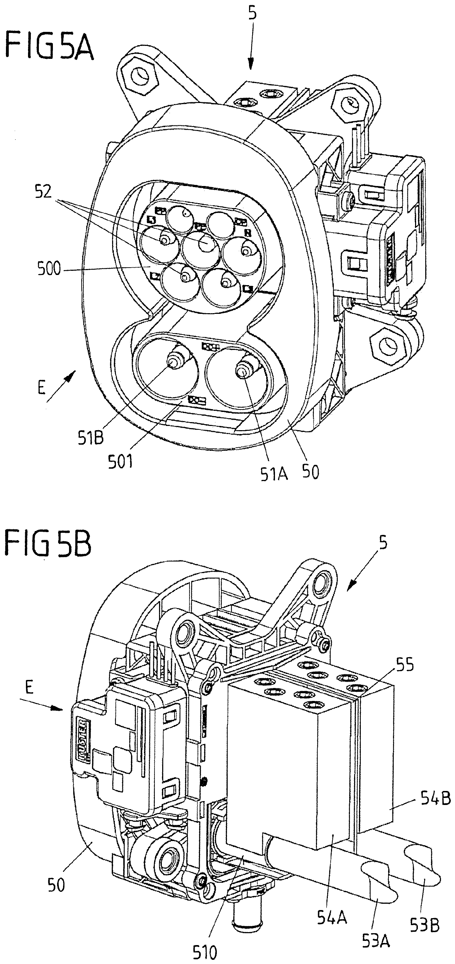

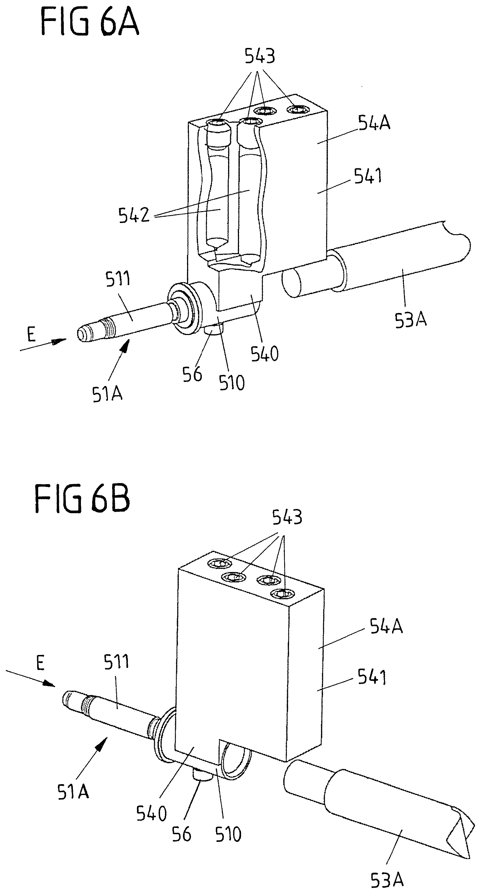

Ein anderes Ausführungsbeispiel eines Steckverbinderteils 5 zeigen Fig. 5A, 5B und 6A, 6B. In Modifikation zu dem Ausführungsbeispiel gemäß Fig. 3A, 3B und 4A, 4B sind bei diesem Ausführungsbeispiel an den Wärmekapazitätselementen 54A, 54B Öffnungen 542 in Form von Sacklöchern ausgebildet, die jeweils durch Schließelemente 543 in Form von Schraubelementen nach außen hin verschlossen sind. In diesen Öffnungen 542 kann ein Material angeordnet sein, das die Fähigkeit zur Aufnahme von Wärmeenergie an den Wärmekapazitätselementen 54A, 54B erhöht.

Bei einem solchen Material kann es sich beispielsweise um ein Phasenwechselmaterial handeln, das einen Phasenübergang beispielsweise von fest zu flüssig und umgekehrt ausführen kann und bei einem solchen Phasenübergang (beispielsweise von fest zu flüssig) Wärme aufnimmt und somit speichert. Solche Phasenwechselmaterialien können beispielsweise Salze oder Parafine als Speichermedium enthalten. Ebenso ist denkbar, eine niedrigschmelzende Metalllegierung (beispielsweise mit einer Schmelztemperatur kleiner 60 °C), zum Beispiel ein sogenanntes Field'sches Metall, zu verwenden.

Während in einem Ausgangszustand bei nicht erwärmten Kontaktelementen 51A, 51B das in den Öffnungen 542 enthaltene Material beispielsweise in einem festen Aggregatzustand ist, kann dieses Material bei Erwärmung einen Phasenübergang durchführen und von einem festen in einen flüssigen Aggregatzustand wechseln, wobei Wärmeenergie aufgenommen und somit gespeichert wird. Bei Abkühlung kann ein umgekehrter Phasenübergang ausgeführt werden, wodurch die Wärme wiederum abgegeben wird.

Ansonsten ist das Ausführungsbeispiel gemäß Fig. 5A, 5B, 6A, 6B identisch dem Ausführungsbeispiel gemäß Fig. 3A, 3B, 4A, 4B, sodass auf das vorangehend Ausgeführte verwiesen werden soll.

Fig. 7 zeigt ein Kontaktelement 51A in einer Explosionsdarstellung. In montierter Stellung ist das zugeordnete Wärmekapazitätselemente 54A mit der Ansetzfläche 544 des Ansetzstücks 540 an den Schaftabschnitt 510 des Kontaktelements 51A angesetzt und über das Schraubelement 56 kraftschlüssig mit dem Schaftabschnitt 510 verbunden. Das Schraubelement 56 durchgreift hierzu eine Befestigungsöffnung 512 an dem Schaftabschnitt 510 und greift in eine zugeordnete Gewindeöffnung an dem Ansetzstück 540 ein.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen.

Grundsätzlich können Wärmekapazitätselemente der hier beschriebenen Art an Steckverbinderteilen in Form von Ladebuchsen oder Ladesteckern im Rahmen eines Ladesystems zum Aufladen eines Elektrofahrzeugs zum Einsatz kommen. Denkbar und möglich ist aber auch eine Verwendung in gänzlich andersgearteten Steckverbinderteilen außerhalb eines Ladesystems zum Aufladen eines Elektrofahrzeugs.

Ein Wärmekapazitätselement der hier beschriebenen Art kann nicht nur an einem Kontaktelement zum Übertragen eines Gleichstroms eingesetzt werden, sondern auch an einem Kontaktelement zum Übertragen eines Wechselstroms.

An einem Steckverbinderteil können sämtliche Kontaktelemente mit einem Wärmekapazitätselement verbunden sein, wobei auch denkbar und möglich ist, nur eine Untergruppe der Kontaktelemente mit einem jeweils zugeordneten Wärmekapazitätselement zu bestücken.

### Bezugszeichenliste

- 1: Ladestation
- 2: Ladekabel
- 200, 201: Ende
- 3: Ladestecker
- 30: Gehäuse
- 300, 301: Steckabschnitt
- 31: Gegenkontaktelement
- 4: Fahrzeug
- 5: Ladebuchse
- 50: Gehäuse
- 500, 501: Steckabschnitt
- 51A, 51B: Kontaktelement
- 510: Schaftabschnitt
- 511: Kontaktstift
- 512: Befestigungsöffnung
- 52: Kontaktelement
- 53A, 53B: Leitung
- 54A, 54B: Wärmekapazitätselement
- 540: Ansetzstück
- 541: Körper
- 542: Öffnung
- 543: Schließelement
- 544: Ansetzfläche
- 55: Gehäusetrennwand
- 56: Befestigungselement
- E: Einsteckrichtung

## Patentansprüche

1. Steckverbinderteil (5) zum Verbinden mit einem Gegensteckverbinderteil (40), mit
- einem Gehäuse (50), das einen Steckabschnitt (500, 501) zum steckenden Verbinden mit dem Steckverbinderteil (5) aufweist, und
- zumindest einem an dem Steckabschnitt (500, 501) angeordneten, einen Schaftabschnitt (510) aufweisenden Kontaktelement (51A, 51B) zum elektrischen Kontaktieren mit einem zugeordneten Gegenkontaktelement (31) des Gegensteckverbinderteils (3),
- einem an dem Schaftabschnitt (510) des zumindest einen Kontaktelements (51A, 51B) angeordneten, fest mit dem Schaftabschnitt (510) verbundenen Wärmekapazitätselement (54A, 54B) zum Aufnehmen von Wärme von dem zumindest einen Kontaktelement (51A, 51B), wobei das Steckverbinderteil (5) eine Mehrzahl von an dem Steckabschnitt (500, 501) angeordneten Kontaktelementen (51A, 51B) aufweist, wobei an jedem Kontaktelement (51A, 51B) ein Wärmekapazitätselement (54A, 54B) angeordnet ist,
**dadurch gekennzeichnet, dass** Wärmekapazitätselemente (54A, 54B) unterschiedlicher Kontaktelemente (51A, 51B) elektrisch voneinander isoliert sind.

2. Steckverbinderteil (5) nach Anspruch 1, wobei zwischen benachbarten Wärmekapazitätselementen (54A, 54B) zweier Kontaktelemente (51A, 51B) eine Gehäusetrennwand (55) aus einem elektrisch isolierenden Material angeordnet ist.

3. Steckverbinderteil (5) nach Anspruch 1 oder 2, wobei das Wärmekapazitätselement (54A, 54B) aus Metall, insbesondere Kupfer oder Aluminium, gefertigt ist.

4. Steckverbinderteil (5) nach einem der vorangehenden Ansprüche, wobei das Wärmekapazitätselement (54A, 54B) mit einem Ansetzstück (540) an den Schaftabschnitt (510) des zumindest einen Kontaktelements (51A, 51B) angesetzt ist.

5. Steckverbinderteil (5) nach Anspruch 4, wobei der Schaftabschnitt (510) des zumindest einen Kontaktelements (51A, 51B) zylindrisch geformt ist und das Ansetzstück (540) eine konvexe, zur Form des Schaftabschnitts (510) komplementäre Ansetzfläche (544) aufweist, mit der das Ansetzstück flächig an den Schaftabschnitt (510) angesetzt ist.

6. Steckverbinderteil (5) nach Anspruch 4 oder 5, wobei das Ansetzstück (540) kraftschlüssig, formschlüssig oder stoffschlüssig mit dem Schaftabschnitt (510) verbunden ist.

7. Steckverbinderteil (5) nach einem der vorangehenden Ansprüche, wobei das Wärmekapazitätselement (54A, 54B) einen massiven quaderförmigen Körper (541) aufweist.

8. Steckverbinderteil (5) nach einem der vorangehenden Ansprüche, wobei das Wärmekapazitätselement (54A, 54B) zumindest eine Öffnung (542) aufweist, in der ein Phasenwechselmaterial angeordnet ist.

## Claims

1. Plug connector part (5) for connection to a mating plug connector part (40), comprising
- a housing (50) which has a plug section (500, 501) for plug-type connection to the plug connector part (5), and
- at least one contact element (51A, 51B), which is arranged on the plug section (500, 501) and has a shaft section (510), for electrical contact-connection with an associated mating contact element (31) of the mating plug connector part (3),
- a thermal capacity element (54A, 54B), which is arranged on the shaft section (510) of the at least one contact element (51A, 51B) and is fixedly connected to the shaft section (510), for receiving heat from the at least one contact element (51A, 51B), wherein the plug connector part (5) has a plurality of contact elements (51A, 51B) which are arranged on the plug section (500, 501), wherein a thermal capacity element (54A, 54B) is arranged on each contact element (51A, 51B),
**characterized in that** the thermal capacity elements (54A, 54B) of different contact elements (51A, 51B) are electrically insulated from one another.

2. Plug connector part (5) according to Claim 1, wherein a housing partition wall (55) composed of an electrically insulating material is arranged between adjacent thermal capacity elements (54A, 54B) of two contact elements (51A, 51B).

3. Plug connector part (5) according to Claim 1 or 2, wherein the thermal capacity element (54A, 54B) is manufactured from metal, in particular copper or aluminium.

4. Plug connector part (5) according to one of the preceding claims, wherein the thermal capacity element (54A, 54B) is attached to the shaft section (510) of the at least one contact element (51A, 51B) by way of an attachment piece (540).

5. Plug connector part (5) according to Claim 4, wherein the shaft section (510) of the at least one contact element (51A, 51B) has a cylindrical shape and the attachment piece (540) has a convex attachment surface (544) which is complementary to the shape of the shaft section (510) and by way of which the attachment piece is attached in a flat manner to the shaft section (510) .

6. Plug connector part (5) according to Claim 4 or 5, wherein the attachment piece (540) is connected to the shaft section (510) in a force-fitting, interlocking or cohesive manner.

7. Plug connector part (5) according to one of the preceding claims, wherein the thermal capacity element (54A, 54B) has a solid cuboidal body (541).

8. Plug connector part (5) according to one of the preceding claims, wherein the thermal capacity element (54A, 54B) has at least one opening (542) in which a phase-change material is arranged.

## Revendications

1. Partie de connecteur enfichable (5) destinée à être reliée à une partie de connecteur enfichable complémentaire (40), munie
- d'un boîtier (50), qui comprend une section enfichable (500, 501) destinée à être reliée par enfichage à la partie de connecteur enfichable (5), et
- d'au moins un élément de contact (51A, 51B), comportant une section tige (510), agencé sur la section enfichable (500, 501), destiné à établir un contact électrique avec un élément de contact complémentaire associé (31) de la partie de connecteur enfichable complémentaire (3),
- d'un élément à capacité thermique (54A, 54B), agencé sur la section tige (510) de l'au moins un élément de contact (51A, 51B), relié de manière fixe à la section tige (510), destiné à recevoir de la chaleur provenant de l'au moins un élément de contact (51A, 51B), la partie de connecteur enfichable (5) comprenant une pluralité d'éléments de contact (51A, 51B) agencés sur la section enfichable (500, 501), un élément à capacité thermique (54A, 54B) étant agencé sur chaque élément de contact (51A, 51B),
**caractérisée en ce que** les éléments à capacité thermique (54A, 54B) de différents éléments de contact (51A, 51B) sont isolés électriquement les uns des autres.

2. Partie de connecteur enfichable (5) selon la revendication 1, dans laquelle une paroi de séparation de boîtier (55) en un matériau électriquement isolant est agencée entre des éléments à capacité thermique (54A, 54B) voisins de deux éléments de contact (51A, 51B) .

3. Partie de connecteur enfichable (5) selon la revendication 1 ou 2, dans laquelle l'élément à capacité thermique (54A, 54B) est fabriqué en métal, notamment en cuivre ou en aluminium.

4. Partie de connecteur enfichable (5) selon l'une quelconque des revendications précédentes, dans laquelle l'élément à capacité thermique (54A, 54B) est appliqué avec une pièce d'application (540) sur la section tige (510) de l'au moins un élément de contact (51A, 51B).

5. Partie de connecteur enfichable (5) selon la revendication 4, dans laquelle la section tige (510) de l'au moins un élément de contact (51A, 51B) est façonnée cylindriquement et la pièce d'application (540) présente une surface d'application convexe (544), complémentaire à la forme de la section tige (510), avec laquelle la pièce d'application est appliquée en surface sur la section tige (510).

6. Partie de connecteur enfichable (5) selon la revendication 4 ou 5, dans laquelle la pièce d'application (540) est reliée par accouplement de force, par accouplement de forme ou par accouplement de matière avec la section tige (510).

7. Partie de connecteur enfichable (5) selon l'une quelconque des revendications précédentes, dans laquelle l'élément à capacité thermique (54A, 54B) comprend un corps parallélépipédique massif (541).

8. Partie de connecteur enfichable (5) selon l'une quelconque des revendications précédentes, dans laquelle l'élément à capacité thermique (54A, 54B) comprend au moins une ouverture (542), dans laquelle un matériau à changement de phase est agencé.
